# EUROPEAN PATENT APPLICATION

(11) **EP 4 438 483 A1**
(43) Date of publication of application: **02.10.2024**
(21) Application number: 24165096.9
(22) Date of filing: 21.03.2024
(51) Int. Cl.: B64D 15/20, G01N 21/15, G01S 7/497

(54) **OPTICAL IMAGING DEVICE DEGRADATION CHECK**

(30) Priority: 27.03.2023 US 202318126612
(71) Applicant: Rosemount Aerospace Inc., Burnsville, MN 55306 (US)
(72) Inventor: LoPRESTO, Vincent R., Eagan, MN 55123 (US); RAY, Mark D., Burnsville, MN 55306 (US); ANDERSON, Kaare Josef, Farmington, MN 55024 (US)
(74) Representative: Dehns

(57) **Abstract**

A method includes checking an optical detector (102) with a field of view for degradation by: directing the optical detector (102) to a surface of an object in the field of view, wherein the surface is positioned at a given distance from the optical detector (102), and wherein the surface has a known reflectance; detecting an optical return from the surface with the optical detector (102) to generate a return signal; and determining whether the return signal is representative of a degraded signal. The method includes outputting an alert for maintenance action if the return signal is indicative of a degraded signal.

## Description

### BACKGROUND

### 1. Field

The present disclosure relates to optical imaging devices, and more particularly to monitoring optical imaging devices for degradation.

### 2. Description of Related Art

Optical sensors, such as used in optical ice detectors, need a method for determining if the signal is degraded. Potential sources of optical sensor degradation include contamination or damage to the window through which the optical sensor views its field of view, or by reduced functionality of the components of the optical sensor itself.

The conventional techniques have been considered satisfactory for their intended purpose. However, there is an ever present need for improved systems and methods for checking optical sensors for degradation. This disclosure provides a solution for this need.

### SUMMARY

A method includes checking an optical detector with a field of view for degradation by: directing the optical detector to a surface of an object in the field of view, wherein the surface is positioned at a given distance from the optical detector, and wherein the surface has a known reflectance; detecting an optical return from the surface with the optical detector to generate a return signal; and determining whether the return signal is representative of a degraded signal. The method includes outputting an alert for maintenance action if the return signal is indicative of a degraded signal.

Degradation can include contamination on a window through which the optical detector views the field of view. The maintenance action can include replacing the window or clearing the window of contamination. Degradation can include a scratch on a lens of the optical detector. The maintenance can includes replacing the lens. Degradation can include one or more degraded photodiodes of the optical detector. The maintenance can include replacement of the one or more degraded photodiodes.

Determining whether the return signal is representative of a degraded signal can include comparing the return signal with an expected return signal. Checking an optical detector with a field of view for degradation can be repeated regularly until there is a return signal indicative of a degraded signal. Determining whether the signal is representative of a degraded signal can include comparing the return signal with an historical signal return from the surface over time.

Determining whether the return signal is representative of a degraded signal can include determining if signal degradation is due to degradation of the surface by outputting an alert to service the surface and repeating checking the optical detector after servicing the surface to see if the return signal is still representative of a degraded signal and if so, outputting an alert for maintenance action other than servicing the surface. Determining whether the return signal is representative of a degraded signal can include tolerancing of acceptable signal return limits for degradation of the surface over time.

The optical detector and the surface can both be aboard a vehicle. The optical detector can be an optical ice detector mounted on a side of an aircraft. The surface can be on a winglet or engine nacelle of the aircraft. The optical detector can be aboard an aircraft, and the surface can be a surface of a garage, hangar, airport terminal, or portable device at an airport terminal.

Checking an optical detector with a field of view for degradation can be repeated regularly until there is a return signal indicative of a degraded signal. The optical detector and the surface can be arranged so the surface is always in the field of view. The method can include using range-gating to ignore the return from the surface when not performing the degradation check. The method can include moving the field of view of the optical detector to include the surface prior to checking the optical detector, and moving the field of view after checking to a field of view that does not include the surface. The method can include, prior to checking the optical detector, determining whether atmospheric conditions permit checking the optical detector.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic perspective view of an embodiment of a system constructed in accordance with the present disclosure, showing an aircraft with an optical detector with various surfaces that can be used for checking the optical detector for degradation; and
Fig. 2 is a schematic view of the optical detector of Fig. 1, showing components that can be checked for degradation.

### DETAILED DESCRIPTION OF THE PREFERRED EMBODIMENTS

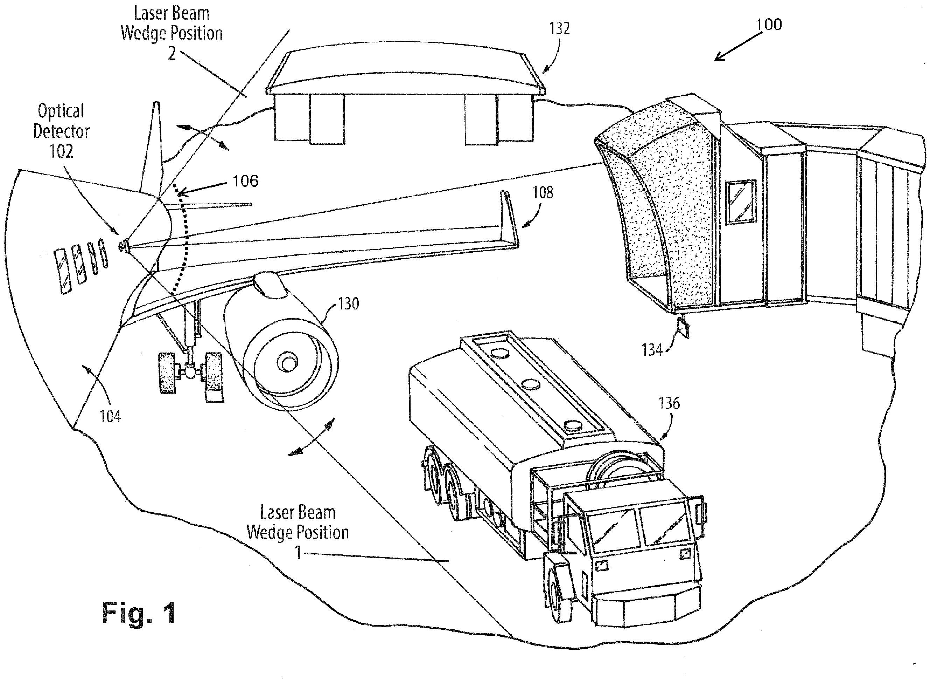

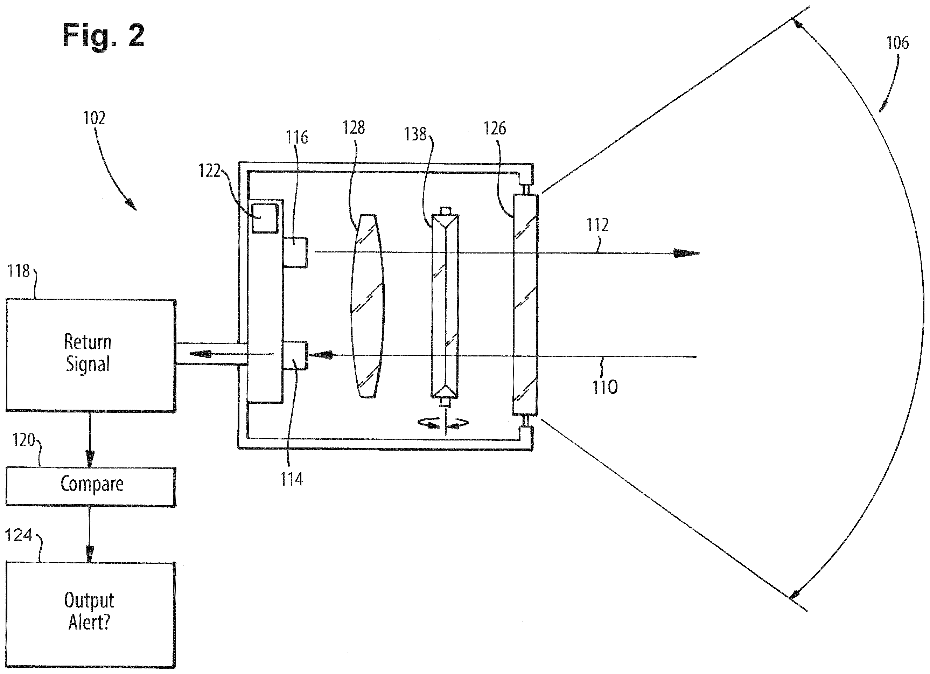

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Figs. 2, as will be described. The systems and methods described herein can be used to check optical detectors, such as optical ice detectors aboard aircraft or other types of optical detectors, for degradation of performance.

The system 100 includes an optical detector 102, which is aboard an aircraft 104. Those skilled in the art will readily appreciate that the optical detector 102 can be aboard any suitable vehicle or platform without departing from the scope of this disclosure. The optical detector 102 has a field of view 106 indicated schematically in Fig. 1 as a cone. A method includes checking the optical detector 102 for degradation by directing the optical detector 102 to a surface 108 of an object, e.g. a surface of the winglet of the aircraft 104, that is in the field of view 106. The surface 108 is positioned at a given distance from the optical detector 102. The given distance should be consistent or constant even if not precisely known, to allow for comparison of a signal to an expected value. The surface 108 has a known reflectance. Directing the optical detector 102 can include actively emitting a laser beam 112 from a laser emitter 116, labeled in Fig. 2, toward the surface 108. The method includes detecting an optical return 110 (labeled in Fig. 2) from the surface 108 with the optical detector 102, e.g. with a photodiode 114, array of photodiodes, or other suitable photodetectors, to generate a return signal 118, indicated schematically in Fig. 2. The method includes determining whether the return signal is representative of a degraded signal, which includes comparing the return signal 118 with an expected return signal, as indicated in Fig. 2 with box 120. The expected return signal can be an ideal signal stored in memory 122 in the optical detector 102. Checking an optical detector with a field of view for degradation is repeated regularly, e.g. once per flight for an aircraft, until there is a return signal indicative of a degraded signal at which point a maintenance alert can be outputted as described below. The expected return signal can be an historical signal return from the surface 108 over time. Multiple historical return signals can be stored in the memory 122 of the optical detector 102 to allow for monitoring trends in the return signals.

Reference is now made to Fig. 2. The method includes outputting an alert for maintenance action if the return signal is indicative of a degraded signal, as indicated in Fig. 2 with the box 124. The alert output can be a message sent to the cockpit, ground crew, a data center, or the like, where maintenance can be ordered. For instance, if the degradation includes contamination on the window 126 through which the optical detector 102 views the field of view 106, the maintenance action includes replacing the window 126 or clearing the window 126 of contamination. If the degradation includes a scratch on a lens 128 of the optical detector 102, the maintenance includes replacing or repairing the lens 128. If the degradation includes one or more degraded photodiodes 114 of the optical detector 102, the maintenance includes replacement of the one or more degraded photodiodes 114.

With reference again to Fig. 1, the method can account for variation in the surface 108, and or atmospheric conditions. The optical detector 102 running the methods disclosed herein can determine if signal degradation is due to degradation of the surface 108 by outputting an alert to service the surface 108 itself. For instance, the maintenance can include cleaning, refinishing, or replacing the surface 108. Then the optical detector 102 can repeat the check after servicing the surface 108 to see if the return signal is still representative of a degraded signal and if so, outputting an alert for a new maintenance action other than servicing the surface 108, as appropriate. Due to expected degradation of the surface 108, the method can include tolerancing of acceptable signal return limits for degradation of the surface 108 over time.

The optical detector 102 can be an optical ice detector, or any other suitable optical device, mounted on a side of an aircraft 104 or other vehicle or platform. The surface 108 is described above as being a surface of a winglet of the aircraft 104. However, any other suitable surface will also suffice, such as a surface of an engine nacelle 130 of the aircraft 104. If the optical detector 102 runs its check once per flight while on the ground between flights, the surface can be a surface of a garage or hangar 132, airport terminal 134, or portable device such as aboard a service vehicle or tool 136 at an airport terminal 134.

The optical detector 102 and the surface 108 (or a surface of one of the other objects listed above) are arranged so the surface 108 is always in the field of view 106. The optical detector 102 can use range-gating to ignore the return from the surface 108 when not performing the degradation check. For instance, if the degradation check is performed for the winglet surface 108 or a surface of the nacelle 130 or other surface of the aircraft 104, that surface can be ignored while the optical detector 102 is performing its main duties, e.g. ice detection, during a flight by using range-gating. The method can include moving the field of view 106 of the optical detector 102, as indicated by the double arrows in Fig. 1, to include the surface 108 (or other surface) prior to checking the optical detector 102. After checking using the surface 108, the optical detector 108 can move its field of view to not include the surface 108 for resuming normal duties, such as ice detection. The optical detector 102 can move its field of view 106 using any suitable movement device such as a rotating optical wedge 138, labeled in Fig. 2, covering the aperture of the sensor, e.g. the aperture of the photodiode or array of photodiodes 114, and of the laser emitter 116 to point at the known surface 108 only when performing the degradation check. The method can also include, prior to checking the optical detector 102, determining whether atmospheric conditions permit checking the optical detector. Depending on characteristics of the device, it may need to account for atmospheric conditions such as fog or rain between the lens 128 and the target, e.g. surface 108. In the case of an optical ice detector, this condition is known by the sensing algorithms, so the degradation check need only be performed only when no precipitation or clouds are present to interfere with the degradation check.

The methods and systems of the present disclosure, as described above and shown in the drawings, provide for a check for optical detectors, such as optical ice detectors aboard aircraft or other types of optical detectors, for degradation of performance. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A method comprising:
checking an optical detector (102) with a field of view for degradation by:
directing the optical detector (102) to a surface of an object in the field of view, wherein the surface is positioned at a given distance from the optical detector (102), and wherein the surface has a known reflectance;
detecting an optical return from the surface with the optical detector (102) to generate a return signal; and
determining whether the return signal is representative of a degraded signal; and
outputting an alert for maintenance action if the return signal is indicative of a degraded signal.

2. The method as recited in claim 1, wherein degradation includes contamination on a window through which the optical detector (102) views the field of view, and wherein the maintenance action includes replacing the window or clearing the window of contamination.

3. The method as recited in any preceding claim, wherein degradation includes a scratch on a lens of the optical detector (102), and wherein the maintenance action includes replacing the lens.

4. The method as recited in any preceding claim, wherein degradation includes one or more degraded photodiodes of the optical detector (102), wherein the maintenance action includes replacement of the one or more degraded photodiodes.

5. The method as recited in any preceding claim, wherein determining whether the return signal is representative of a degraded signal includes comparing the return signal with an expected return signal.

6. The method as recited in any preceding claim, wherein checking an optical detector (102) with a field of view for degradation is repeated regularly until there is a return signal indicative of a degraded signal.

7. The method as recited in claim 6, wherein determining whether the signal is representative of a degraded signal includes comparing the return signal with an historical signal return from the surface over time.

8. The method as recited in claim 7, wherein determining whether the return signal is representative of a degraded signal includes determining if signal degradation is due to degradation of the surface by outputting an alert to service the surface and repeating checking the optical detector (102) after servicing the surface to see if the return signal is still representative of a degraded signal and if so, outputting an alert for maintenance action other than servicing the surface.

9. The method as recited in claim 7, wherein determining whether the return signal is representative of a degraded signal includes tolerancing of acceptable signal return limits for degradation of the surface over time.

10. The method as recited in any preceding claim, wherein the optical detector (102) and the surface are both aboard a vehicle.

11. The method as recited in any preceding claim, wherein the optical detector (102) is an optical ice detector mounted on a side of an aircraft, and wherein the surface is on a winglet or engine nacelle of the aircraft.

12. The method as recited in any preceding claim, wherein the optical detector (102) is aboard an aircraft, and wherein the surface is a surface of a garage, hangar, airport terminal, or portable device at an airport terminal.

13. The method as recited in any preceding claim, wherein checking an optical detector (102) with a field of view for degradation is repeated regularly until there is a return signal indicative of a degraded signal, and wherein the optical detector (102) and the surface are arranged so the surface is always in the field of view, and further comprising using range-gating to ignore the return from the surface when not performing the degradation check.

14. The method as recited in any preceding claim, further comprising moving the field of view of the optical detector (102) to include the surface prior to checking the optical detector (102), and moving the field of view after checking to a field of view that does not include the surface.

15. The method as recited in any preceding claim, further comprising, prior to checking the optical detector (102), determining whether atmospheric conditions permit checking the optical detector (102).
